**Europäisches Patentamt**

**European Patent Office**

**Office européen des brevets**

(19)

(11) Veröffentlichungsnummer: **0 088 210**
**B1**

(12) **EUROPÄISCHE PATENTSCHRIFT**

(45) Veröffentlichungstag der Patentschrift:
**19.11.87**

(51) Int. Cl.⁴: **H 01 H 9/06**

(21) Anmeldenummer: **83100264.7**

(22) Anmeldetag: **14.01.83**

(54) Schaltschieber für Elektrowerkzeuge.

(30) Priorität: **21.01.82 DE 3201744**

(43) Veröffentlichungstag der Anmeldung:
**14.09.83 Patentblatt 83/37**

(45) Bekanntmachung des Hinweises auf die Patenterteilung:
**19.11.87 Patentblatt 87/47**

(84) Benannte Vertragsstaaten:
**AT BE CH FR GB IT LI NL SE**

(56) Entgegenhaltungen:
**DE - A - 2 929 320**
**FR - A - 2 223 965**
**FR - A - 2 444 329**
**GB - A - 2 044 536**
**US - A - 3 662 136**

(73) Patentinhaber: **Karl M. Reich, Maschinenfabrik GmbH, Kisslingstrasse 1 Postfach 1740, D-7440 Nürtingen (DE)**

(72) Erfinder: **Meyer, Klaus, Brunnenweg 4, D-7440 Nürtingen (DE)**

ACTORUM AG

## Beschreibung

Die Erfindung betrifft einen Schaltschieber für Elektrowerkzeuge gemäss Oberbegriff von Anspruch 1.

Bei Elektrowerkzeugen, wie z.B. Bohrmaschinen, Stichsägen, Winkelschleifer usw. ist es bekannt, den Elektromotor mittels eines von Hand betätigbaren verschiebbaren Schaltorgans ein- und auszuschalten. In der Einschaltstellung wird dieses Schaltorgan durch einen Taster verriegelt, der zum Ausschalten von Hand entriegelt werden muss. In diesem Fall läuft also der Elektromotor beim Loslassen des Schaltorgans weiter, was in bestimmten Ländern nicht zulässig ist. Dort muss sich das Elektrowerkzeug nach Loslassen des Schaltorgans von selbst ausschalten (Totmannschalter). Bei der Fertigung von Elektrowerkzeugen bedeutet diese Forderung, dass beim gleichen Produkt verschiedene Schalter eingebaut werden müssen, was eine Verteuerung der Fertigung, der Lagerhaltung und des Vertriebs nach sich zieht.

Aufgabe der vorliegenden Erfindung ist daher die Schaffung eines Schaltschiebers der eingangs genannten Art, bei dem es bei der Fertigung mit einfachen Mitteln möglich ist, das Elektrowerkzeug wahlweise mit einem verriegelbaren Schalter oder mit einem Totmannschalter auszurüsten.

Diese Aufgabe wird erfindungsgemäss durch die im kennzeichnenden Teil des Anspruches 1 angegebenen Merkmale gelöst. Damit lassen sich die Elektrowerkzeuge bei der Fertigung dem jeweiligen Bedarf auf einfache Weise anpassen. Je nach Einbau der Rastplatte ergibt sich somit ein verriegelbarer Schalter oder ein Totmannschalter.

Der eigentliche Schalter ist leicht auswechselbar und der erfindungsgemässe Schaltschieber lässt sich auch an bereits in der Produktion befindlichen Elektrowerkzeugen anbauen.

Die erfindungsgemässe Anordnung des Schaltschiebers erlaubt ein schnelles Ausschalten des Elektromotors bei beiden Ausführungen, was zur Sicherheit der Maschine wesentlich beiträgt.

Im folgenden ist ein Ausführungsbeispiel der Erfindung unter Bezugnahme auf die Zeichnungen näher beschrieben.

Es zeigen:

Fig. 1 Elektromotor für Elektrowerkzeuge, im Bereich des Schaltschiebers teilweise längs geschnitten.

Fig. 2 Schnitt nach Linie II–II in Fig. 1.

Fig. 3 Teilschnitt wie bei Fig. 1, Rastplatte in Verriegelungsstellung, Taster bei Einschaltstellung eingerastet.

Fig. 4 Teilschnitt wie Fig. 3, Rastplatte in Stellung Totmannschalter, Taster bei Einschaltstellung eingeschwenkt.

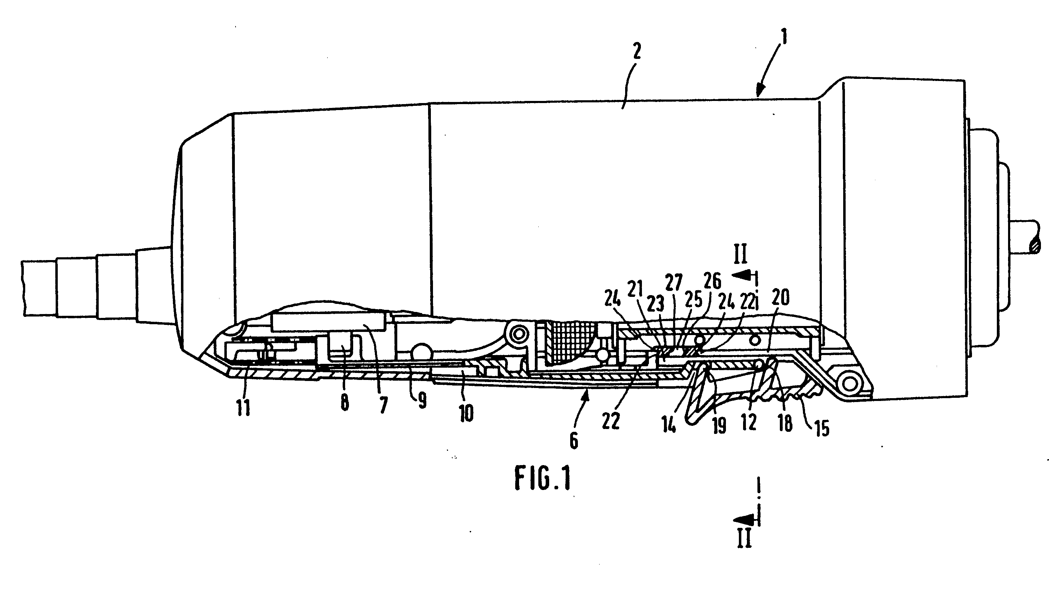

Fig. 1 zeigt den Elektromotor 1 eines nicht vollständig dargestellten Elektrowerkzeugs, wie z.B. einer Bohrmaschine, einer Stichsäge, eines Winkelschleifers usw., wobei das Motorgehäuse 2 einen von Hand umfassbaren Bereich aufweist.

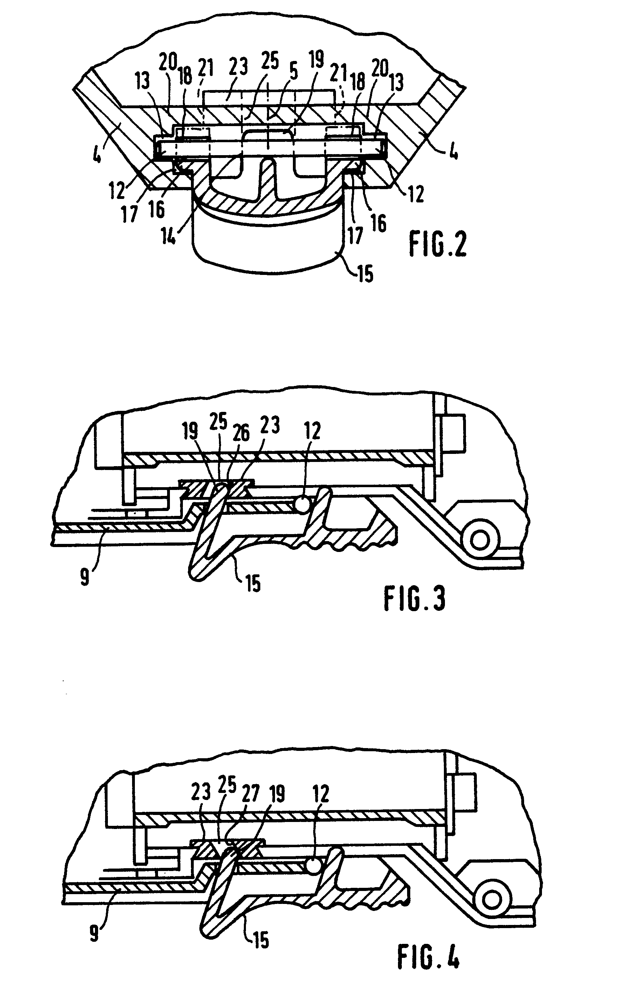

Beim vorliegenden Ausführungsbeispiel handelt es sich um einen zylindrischen Stabmotor, dessen Motorgehäuse 2 aus zwei Halbschalen 4 besteht, die eine vertikale Trennebene 5 aufweisen. (Fig. 2).

Beim Gebrauch des vorliegenden Ausführungsbeispieles liegt die Achse des Elektromotors 1 waagrecht, an seiner Unterseite ist ein Schaltschieber 6 angeordnet, mit dem ein Ein/Aus-Schalter 7 für den Elektromotor 1 betätigbar ist.

Dazu greift am Schaltzapfen 8 des Schalters 7 ein Schaltorgan 9 an, das in Aussparungen 10 der Halbschalen 4 des Motorgehäuses 2 gegen Wirkung einer Druckfeder 11 verschiebbar gelagert ist.

Das Schaltorgan 9 an seinem dem Schalter 7 abgewandten Ende mit zylindrischen Zapfen 12 versehen, die in Taschen 13 der Halbschalen 4 verschiebbar gelagert sind. In der Nähe dieser Zapfen 12 ist das Schaltorgan 9 mit einem Durchbruch 14 versehen.

Ebenfalls an der Unterseite von Motorgehäuse 2 und dieses überragend ist ein Taster 15 angeordnet (Fig. 1 und 2), dessen seitliche Wülste 16 in Taschen 17 der Halbschalen 4 verschiebbar gelagert sind. In den Wülsten 16 sind halbkreisförmige Lagernuten 18 vorgesehen, in denen die Zapfen 12 gelagert sind. An seinem schalterseitigen Ende weist der Taster 15 eine Rastnase 19 auf, die in der in Fig. 1 gezeigten Ausschaltstellung des Schaltschiebers in den Durchbruch 14 eingreift.

In Stegen 20 der Halbschalen 4 sind einander ergänzende Durchbrüche 21 vorgesehen, die schwalbenschwanzförmige Schmalflächen 22 aufweisen. In diesen Durchbruch 21 ist eine Rastplatte 23 eingelegt, in deren geneigte Seitenflächen 24 die Schmalflächen 22 eingreifen. Die Rastplatte 23 ist mit einem rechteckigen Durchbruch 25 versehen, der zur Fläche der Rastplatte 23 geneigte Rastflächen 26 und 27 aufweist.

Zur Funktion des erfindungsgemässen Schaltschiebers 3 zeigt Fig. 1 die Ruhestellung, bei der das Schaltorgan 9 mit dem Taster 15 unter Wirkung der Druckfeder 11 in einer dem nicht dargestellten antreibbaren Werkzeug nächstliegenden Stellung gehalten wird. Der Elektromotor 1 ist durch Schalter 7 ausgeschaltet. Zum Einschalten wird jetzt Taster 15 vom antreibbaren Werkzeug weg in Richtung Ende des Elektromotors 1 verschoben und in seiner Arbeitsstellung so um die Zapfen 12 im Uhrzeigersinn verschwenkt, dass seine Rastnase 19 in den Durchbruch 25 von Rastplatte 23 eingreift. (Siehe Fig. 3). Da sich jetzt die Rastnase 19 mit der geneigten Rastfläche 26 verhakt, wird der Schaltschieber 3 und damit Schalter 7 in ihrer Einschaltstellung festgehalten. Der Elektromotor 1 läuft also auch weiter, wenn der Taster 15 losgelassen wird. Zum Lösen der Verriegelung zwischen Rastnase 19 und Rastfläche 26 wird durch Fingerdruck auf den Taster 15 dieser im Gegenuhrzeigersinn um die Zapfen 12 verschwenkt, so dass sich die Verriegelung löst und der Schaltschieber 3 unter Wirkung der Druckfeder 11 in seine Ruhestellung zurückkehrt. Durch die Anordnung des Schaltschiebers 3 an der Unterseite des Elektromotors 1 lässt sich Taster 15 sowohl von Links- als auch Rechtshändern bequem bedienen.

Zur Ausführung des Elektrowerkzeugs mit Totmannschalter wird beim Zusammenbau die Rastplatte 23 in einer Stellung gemäss Fig. 4 eingelegt. Der Durchbruch 25 ist jetzt von aussen nach innen gesehen mit der Einschaltrichtung geneigt. Nach dem Einschalten mit Schaltschieber 3 und Verschwenken von Taster 15 trifft somit die Rastnase 17 auf die gegen das antreibbare Werkzeug gelegene Rastfläche 27, so dass nach Loslassen von Taster 15 sich dieser ohne weiteres unter Wirkung der Druckfeder 11 und des Schaltorgans 9 im Gegenuhrzeigersinn verschwenkt, so dass der Schaltschieber 3 selbsttätig in seine Ruhestellung zurückkehrt und über den Schalter 7 den Elektromotor 1 ausschaltet.

## Patentansprüche

1) Schaltschieber für Elektrowerkzeuge mit den Merkmalen:

a) einem im Motorgehäuse (2) gegen Federwirkung verschiebbar angeordneten, mit dem Ein/Aus-Schalter (7) des Elektromotors zusammenwirkenden Schaltorgan (9),

b) einem mit dem Schaltorgan verbundenen, im Motorgehäuse (2) schwenkbar gelagerten, von Hand betätigbaren Taster (15) mit einem Rastelement (19),

c) einer im Motorgehäuse angeordneten, geneigten Rastfläche (26, 27), dadurch gekennzeichnet, dass im Motorgehäuse (2) eine mit den Rastflächen (26, 27) versehene Rastplatte (23) veränderbar befestigt und derart ausgebildet ist, dass sie in einer ersten Stellung mit dem Taster (19) einen Totmann-Schalter bildet und in einer zweiten Stellung mit der geneigten Rastfläche (26, 27) das Schaltorgan mit dem Taster (15) in der Einschaltstellung des Ein/Aus-Schalters verriegelt.

2) Schaltschieber nach Anspruch 1, dadurch gekennzeichnet, dass die Rastplatte (23) einen zur Bewegungsrichtung des Schaltorgans (9) geneigten Durchbruch (25) aufweist, der in der zweiten Stellung von aussen nach innen gegen die Einschaltrichtung (Fig. 3) (Verriegelungs-Stellung) und in der ersten Stellung (Totmann-Stellung) mit der Einschaltrichtung (Fig. 4) geneigt ist.

3) Schaltschieber nach Anspruch 1 oder 2, dadurch gekennzeichnet, dass der Taster (15) seitliche Wülste (16) aufweist, mit denen er in Taschen (17) des Motorgehäuses (2) verschiebbar gelagert ist.

4) Schaltschieber nach einem der Ansprüche 1 bis 3, dadurch gekennzeichnet, dass das Schaltorgan (9) an seinem einen Ende Zapfen (12) aufweist, mit denen es in Taschen (13) des Motorgehäuses (2) verschiebbar gelagert ist.

5) Schaltschieber nach Anspruch 4, dadurch gekennzeichnet, dass das Schaltorgan (9) einen Durchbruch (14) aufweist, in den eine Rastnase (19) des Tasters (15) eingreift.

6) Schaltschieber nach einem der Ansprüche 1 bis 5 mit einem aus zwei Halbschalen (4) bestehenden Motorgehäuse (2), dadurch gekennzeichnet, dass Schaltorgan (9), Taster (15) und Rastplatte (23) beim Zusammenbau einlegbar im Motorgehäuse (2) gelagert sind.

7) Schaltschieber nach einem der Ansprüche 1 bis 6 mit einem von Hand umfassbaren Motorgehäuse, dadurch gekennzeichnet, dass der Schaltschieber (3) an der Unterseite des Motorgehäuses (2) angeordnet ist und dass der Taster (15) zum Einschalten vom antreibbaren Werkzeug weg verschoben werden muss.

## Claims

1) Sliding switch for electric tools having the following features:

a) a switching member (9) arranged in the motor housing (2) for sliding displacement against the action of a spring, and coacting with the ON/OFF switch (7) of the electric motor,

b) a push-button (15) connected to the said switching member and comprising a locking element (19), the said push-button (15) being pivotally seated in the motor housing (2) and arranged for being manually actuated,

c) an inclined locking surface (26, 27) provided in the motor housing, characterized in that a locking plate (23) provided with the said locking surfaces (26, 27) is variably fixed in the motor housing (2) and designed in such a manner that in a first position the locking plate and the push-button (19) form together a dead-man's switch, while in a second position the inclined locking surface (26, 27) of the locking plate (23) locks the push-button (15) in the ON position of the ON/OFF switch.

2) Sliding switch according to claim 1, characterized in that the locking plate (23) comprises an opening (25) inclined relative to the sense of movement of the switching member (9), the said opening (25) being inclined inwardly, against the switching-on direction (fig. 3) in the second position (locking position), while being inclined in the switching-on direction (fig. 4) in the first position (dead-man's position).

3) Sliding switch according to claim 1 or 2, characterized in that the push-button (15) is provided with lateral elevations by which it is slidably guided in plockets (17) of the motor housing (2).

4) Sliding switch according to any of claims 1 to 3, characterized in that the switching member (9) is provided on one of its ends with pins (12) by means of which it is seated in sliding relationship in pockets (13) of the motor housing (2).

5) Sliding switch according to claim 4, characterized in that the switching member (9) is provided with an opening (14) which is engaged by a snap-in lug (19) on the push-button (15).

6) Sliding switch according to any of claims 1 to 5 comprising a motor housing (12) consisting of two semi-shells (4), characterized in that the switching member (9), the push-button (15) and the locking plate (23) are seated in the motor housing (2) in such a manner that they can be inserted during assembly.

7) Sliding switch according to any of claims 1 to 6 comprising a motor housing that can be grasped by one hand, characterized in that the sliding switch (3) is arranged on the bottom of the motor housing (2) and that for switching on the tool the push-button (15) must be displaced in a direction away from the tool to be driven.

## Revendications

1) Curseur de commutation pour outils électriques, aux caractéristiques suivantes:

a) un organe de commutation (9) disposé dans le carter de moteur (2), déplaçable tout en agissant sur un ressort, de façon combinée avec le disjoncteur à deux positions (7) du moteur électrique,

b) un bouton poussoir (15) avec élément de crantage (19), actionnable à la main, relié à l'organe de commutation et logé, tout en pouvant pivoter, dans le carter de moteur (2),

c) une face de crantage (26, 27) inclinée et disposée dans le carter de moteur, caractérisé en ce que, dans le carter de moteur (2), une plaque de crantage (23), dotée des faces de crantage (26, 27), est fixée de façon variable et est conçue de telle manière que, dans une première position, celle-ci forme, avec le bouton poussoir (19), un commutateur d'homme mort et que, dans une deuxième position, avec la face de crantage inclinée (26, 27), celle-ci verrouille l'organe de commutation et le bouton poussoir (15) dans la position d'enclenchement du disjoncteur à deux positions.

2) Curseur de commutation selon la revendication n° 1, caractérisé ce que la plaque d'enclenchement (23) présente une ouverture (25) inclinée dans le sens du mouvement de l'organe de commutation (9), ouverture qui, dans la deuxième position, est inclinée de l'extérieur vers l'intérieur à l'inverse du sens d'enclenchement (fig. 3) et, dans la première position (position «homme mort»), dans le sens de l'enclenchement (fig. 4).

3) Curseur de commutation selon la revendication n° 1 ou 2, caractérisé en ce que le bouton poussoir (15) présente des renflements latéraux (16) grâce auxquels celui-ci est logé tout en pouvant être déplacé dans des poches (17) du carter de moteur (2).

4) Curseur de commutation selon l'une des revendications n° 1 à 3, caractérisé en ce que l'organe de commutation (9) présente à son extrémité des tenons (12) grâce auxquels celui-ci est logé, tout en pouvant être déplacé, dans des poches (13) du carter de moteur (2).

5) Curseur de commutation selon la revendication n° 4, caractérisé en ce que l'organe de commutation (9) présente une ouverture (14) dans laquelle s'engage un bec de crantage (19) du bouton poussoir (15).

6) Curseur de commutation selon l'une des revendications n° 1 à 5, avec un carter de moteur (2) composé de deux demi-coques (4), caractérisé en ce que l'organe de commutation (9), le bouton poussoir (15) et la plaque de crantage (23) sont logés dans le carter de moteur (2), tout en pouvant y être insérés lors de l'assemblage.

7) Curseur de commutation selon l'une des revendications n° 1 à 6, avec un carter de moteur tenant dans la main, caractérisé en ce que le curseur de commutation (3) est disposé sur la face inférieure du carter de moteur (2) et que le bouton poussoir (15) doit être éloigné de l'outil actionnable pour l'enclenchement.

FIG.1

13 20 18 21 23 25 5 19 21 18 20 13

4

12
17 16
14

12
17 16
15

**FIG.2**

19 25 26 23 12

9

15

**FIG.3**

23 25 27 19 12

9

15

**FIG.4**